# EUROPEAN PATENT APPLICATION

(11) **EP 3 731 171 A1**
(43) Date of publication of application: **28.10.2020**
(21) Application number: 18890740.6
(22) Date of filing: 17.12.2018
(51) Int. Cl.: G06Q 50/06, E03B 1/00

(54) **ASSET MANAGEMENT DEVICE AND ASSET MANAGEMENT METHOD**

(30) Priority: 22.12.2017 JP 2017246521
(71) Applicant: NEC Corporation, 108-8001 Tokyo (JP)
(72) Inventor: TOMINAGA, Shin, Tokyo 108-8001 (JP); KIKUCHI, Katsumi, Tokyo 108-8001 (JP); TAKAHASHI, Masatake, Tokyo 108-8001 (JP)
(74) Representative: Betten & Resch
(86) International application number: PCT/JP2018/046269
(87) International publication number: WO 2019/124292

(57) **Abstract**

[Problem] To provide an asset management device that can appropriately present, on the basis of priority level, information on pipes requiring a response.

[Solution] The asset management device is configured to be provided with an input means 1, an evaluation item setting means 2, a priority level computation means 3, and an output means 4. The input means 1 inputs information on pipes to be analyzed as pipe information. The evaluation item setting means 2 sets an evaluation item on the basis of pipe information common among a plurality of pipes to be analyzed. The priority level computation means 3 computes, with respect to the evaluation item, the priority level corresponding to each pipe to be analyzed. The output means 4 outputs data that compares the computed priority levels between pipes to be analyzed.

## Description

### [Technical Field]

The present invention relates to a technique of evaluating piping installation and the like, and particularly relates to a technique of presenting a priority level of replacement or repair of pipes.

### [Background Art]

In many cases, piping installation such as a waterworks system has a major scale. Further, in some cases, in such piping installation, a progress of degradation of a pipe embedded underground differs depending on acidity, an electric potential, a pressure, and the like of soil in which the pipe is embedded. Thus, a relatively new pipe may be rapidly degraded, and required to be replaced at an early stage.

Meanwhile, within a limited budget, an experienced water engineer makes a plan for replacement or repair of pipes, based on attribute information on the pipes, such as a type, a size of water feeding port, and a laying year, and a water supply utility that manages the pipes implement replacement or repair in accordance with the plan. Thus, it is desired that a priority level be determined in order to implement repair or replacement of the pipes appropriately and efficiently, and a related technique has been developed. As a technique for determining a priority level for such efficient implementation of repair or replacement of pipes, a technique as in PTL 1 is disclosed.

PTL 1 relates to a water pipe update management system. The water pipe update management system in PTL 1 includes a list output means that updates evaluation items for determining a priority level for update, based on pipe type information, laying place information, laying year information, and water leakage information on water pipes, and displays evaluation information before and after changes of the evaluation items in a comparable manner. PTL 1 claims that a priority level for update of water pipes can be determined easily by calculating evaluation information on the water pipes, based on the water pipe information and the evaluation items. Further, PTL 2 discloses a management system for pipes.

### [Citation List]

### [Patent Literature]

[PTL 1] Japanese Patent No. 6165952
[PTL 2] Japanese Unexamined Patent Application Publication No. 2003-242228

### [Summary of Invention]

### [Technical Problem]

However, the techniques in PTLs 1 and 2 are not sufficient in the following point. Piping installation has a major scale and an enormous number of pipes, and a form and installation place thereof are also diverse. Thus, available information, measurement data, and the like differ depending on pipes, and there is a possibility that some pipes may lack of data associated with evaluation items. In such a case, there is a risk that pipes being evaluation targets cannot be compared with each other correctly. Thus, the techniques in PTLs 1 and 2 are not sufficient as a technique of appropriately presenting information on pipes that require repair or replacement.

In order to solve the above-mentioned problem, an object of the present invention is to provide an asset management device capable of appropriately presenting information on a pipe that requires a response, based on a priority level.

### [Solution to Problem]

In order to solve the above-mentioned problem, an asset management device according to the present invention includes an input means, an evaluation item setting means, a priority level calculation means, and an output means. The input means receives an input of information on a pipe being a diagnostic target as pipe information. The evaluation item setting means sets an evaluation item, based on the pipe information that is commonly shared by a plurality of pipes being diagnostic targets. The priority level calculation means 3 calculates a priority level of a response for each of the pipes being diagnostic targets with respect to the evaluation item. The output means outputs data for comparing calculated priority levels among the pipes being diagnostic targets.

In an asset management method according to the present invention, information on a pipe being a diagnostic target is acquired as pipe information. In the asset management method according to the present invention, based on the pipe information that is commonly shared by a plurality of pipes being diagnostic targets, an evaluation item is set. In the asset management method according to the present invention, a priority level of a response for each of the pipes being diagnostic targets with respect to the evaluation item is calculated. In the asset management method according to the present invention, data for comparing calculated priority levels among the pipes being diagnostic targets are output.

### [Advantageous Effects of Invention]

According to the present invention, information on a pipe that requires a response can be appropriately presented based on a priority level.

### [Brief Description of Drawings]

[Fig. 1] Fig. 1 is a diagram illustrating an outline of a configuration of a first example embodiment of the present invention.
[Fig. 2] Fig. 2 is a diagram illustrating an outline of a configuration of a second example embodiment of the present invention.
[Fig. 3] Fig. 3 is a diagram illustrating a configuration example of an analysis unit of the second example embodiment of the present invention.
[Fig. 4] Fig. 4 is a diagram schematically illustrating an example of parameters in the second example embodiment of the present invention.
[Fig. 5] Fig. 5 is a diagram schematically illustrating an example of parameters in the second example embodiment of the present invention.
[Fig. 6] Fig. 6 is a diagram illustrating an operation flow of the second example embodiment of the present invention.
[Fig. 7] Fig. 7 is a diagram illustrating an outline of a configuration of a third example embodiment of the present invention.
[Fig. 8] Fig. 8 is a diagram illustrating a configuration example of an analysis unit of the third example embodiment of the present invention.
[Fig. 9] Fig. 9 is a diagram illustrating an operation flow of the third example embodiment of the present invention.
[Fig. 10] Fig. 10 is a diagram illustrating an operation flow of the third example embodiment of the present invention.
[Fig. 11] Fig. 11 is a diagram illustrating an outline of a configuration of a fourth example embodiment of the present invention.
[Fig. 12] Fig. 12 is a diagram illustrating an operation flow of the fourth example embodiment of the present invention.
[Fig. 13] Fig. 13 is a diagram illustrating another configuration example in the present invention.

### [Example Embodiment]

### [First Example Embodiment]

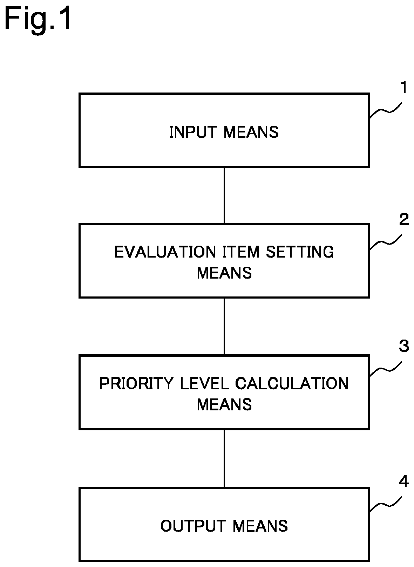

With reference to the drawings, a first example embodiment of the present invention is described in detail. Fig. 1 is a block diagram illustrating an outline of a configuration of an asset management device according to the present example embodiment. The asset management device according to the present example embodiment includes an input means 1, an evaluation item setting means 2, a priority level calculation means 3, and an output means 4. The input means 1 receives an input of information on pipes being diagnostic targets as pipe information. The evaluation item setting means 2 sets evaluation items, based on pipe information that is shared commonly by a plurality of pipes being diagnostic targets. The priority level calculation means 3 calculates a priority level of a response for each of the pipes being diagnostic targets with respect to the evaluation items. The output means 4 outputs data for comparing calculated priority levels among the pipes being diagnostic targets.

In the asset management device according to the present example embodiment, the evaluation item setting means 2 sets the evaluation items, based on the pipe information or the measurement data that are commonly shared by the pipes being diagnostic targets, and the priority level calculation means 3 calculates the priority level of a response such as replacement or repair for each of the pipes being diagnostic targets. Thus, the asset management device according to the present example embodiment can select evaluation items without data lack or the like, and calculate a priority level. Thus, with regard to the same evaluation items for all the pipes being evaluation targets, the asset management device according to the present example embodiment can set the priority level of a response such as replacement or repair of the pipes. As a result, the asset management device according to the present example embodiment can present the information on the pipes that require a response appropriately, based on the priority level.

### [Second Example Embodiment]

### [Configuration of Second Example Embodiment]

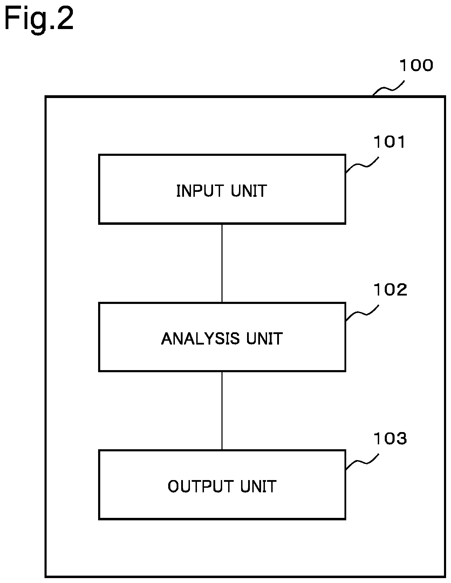

With reference to the drawings, a second example embodiment of the present invention is described in detail. Fig. 2 is a block diagram illustrating an outline of a configuration of an asset management device according to the present example embodiment. The asset management device according to the present example embodiment is a device that acquires information on piping installation being a diagnostic target and presents a priority level of replacement or repair of pipes.

An asset management device 100 according to the present example embodiment includes an input unit 101, an analysis unit 102, and an output unit 103.

The input unit 101 has a function of receiving an input of information from the outside. When information indicating start of calculation of a priority level is input, the input unit 101 transmits the input information to the analysis unit 102. Further, the input unit 101 receives various types of information on the piping installation from the outside, and inputs various types of the received information to the analysis unit 102. The various types of information on the piping installation are described later.

On a screen of a terminal device connected to the asset management device 100, the input unit 101 may output image data for input, specifically, image data for displaying input items, selection items, and the like. In this case, a user of the asset management device 100 can input the pipe information while confirming the input items and the like on the screen of the terminal device. Further, a function of the input unit 101 of the present example embodiment is equivalent to the input means 1 of the first example embodiment.

The analysis unit 102 has a function of calculating a priority level indicating a priority order of replacement or repair of the pipes, based on the various types of information on the piping installation of the pipes being evaluation targets. The analysis unit 102 sets an evaluation item used for setting a priority level for the pipes being evaluation targets. The analysis unit 102 calculates a priority level for each of the pipes with regard to the set evaluation item, and transmits results to the output unit 103.

The various types of information on the piping installation refer to information relating to an installation state and characteristics of the pipes, characteristics of a fluid flowing through the pipes, a state of the pipes, and other items that cause replacement or repair of the pipes. The various types of information on the piping installation are relevant to the pipe information of the first example embodiment.

As the various types of information on the piping installation, specifically, the pipe information, pipe type information, laying information, structure information, and physical information acquired by actual measurement can be used. As the management information, information on a material of pipes, a diameter, a frictional coefficient of pipes, a propagation speed of a pressure wave of a fluid through a pipe and the like is used. As the laying information, information on a year when a pipe is laid, characteristics and a type of peripheral soil in which a pipe is embedded, a degree of construction difficulty of a target pipe, a construction cost of a target pipe, an insurance premium for a target pipe, and the like is used. As the structure information, information on a location at which a pipe is laid, a joint state with other pipes or the number of joined pipes, and the like is used. Further, as the physical information acquired by actual measurement, information on vibration propagation characteristics of a target pipe, a pressure of a fluid inside a target pipe, and the like is used.

The various pieces of information on the piping installation may further include information on elements that influence pressure vibration of pipes, such as a tank and a valve. A frictional coefficient and a propagation speed can be calculated from a material of pipes, surface roughness of an inner surface of the pipes, and the like, and hence information for calculating those values may be included in place of the frictional coefficient and the propagation speed.

The piping installation of the present example embodiment is used for a network of water pipes. The various types of information on the piping installation used for a network of water pipes may include an amount of water consumption of a consumer who consumes water from the network of water pipes, a water reservoir connected to the network of water pipes, a tank similarly connected to the network of water pipes, a pressure regulating valve, presence or absence of important installations, environmental influence information, consumer complaints information, and the like. The presence or absence of important installations indicates presence or absence of facilities such as a hospital and a factory near a target pipe where suspension of water supply is required to be avoided particularly. Further, the environmental influence information refers to information indicating influence that a target pipe may have on surrounding environment when an accident occurs. The consumer complaints information refers to information on complaints from a consumer about a target pipe or an internal fluid. The piping installation may be used for installations other than a network of water pipes. For example, the piping installation may be used as piping installation where a gaseous body is used as a fluid for supplying or discharging gas, or piping installation through which a fluid such as a raw material, an intermediate body, a product material, and a waste material flows.

The analysis unit 102 selects any information indicating one or more items from the various types of information on the piping installation, and sets the information as evaluation item(s). The analysis unit 102 selects information used as an evaluation item from the various types of information that are commonly shared by the pipes being evaluation targets in the piping installation. The analysis unit 102 calculates a priority level of replacement or repair of pipes with regard to the set evaluation item. The analysis unit 102 generates data for comparing the priority levels of replacement or repair of each of the pipes, based on the calculated priority levels, and outputs the data to a display device or the like.

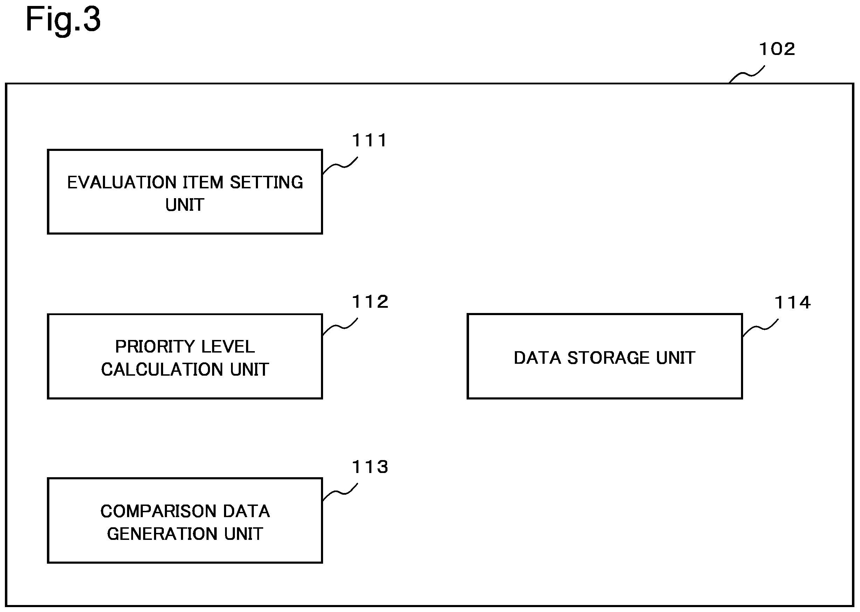

Fig. 3 is a block diagram illustrating an example of the analysis unit 102 of the present example embodiment. The analysis unit 102 illustrated in Fig. 3 includes an evaluation item setting unit 111, a priority level calculation unit 112, a comparison data generation unit 113, and a data storage unit 114.

From the various types of information on the piping installation, the evaluation item setting unit 111 sets an evaluation item at the time of calculating a priority level. Selection of the evaluation item is performed from the various types of information that are commonly shared in the piping installation being an evaluation target, based on the priority level set in advance. The evaluation item setting unit 111 transmits information on the set evaluation item to the priority level calculation unit 112.

The priority level calculation unit 112 calculates a priority level for each of the pipes, based on the various types of information on the piping installation. For example, calculation of the priority level is performed by subjecting data, which are converted into numeral values for each evaluation item, to calculation based on an algorithm set in advance.

The comparison data generation unit 113 generates data that allow comparison of the priority levels of the pipes. The comparison data generation unit 113 generates the data for comparison by, for example, generating display data in which pieces of data associating the priority levels with information for identifying pipes are arranged in an order from the pipe having the highest priority level. As the data for comparison, the comparison data generation unit 113 may also generate map data in which the priority levels are indicated with numerical values or colors at locations of the pipes on a map or a two-dimensional coordinate. The comparison data generation unit 113 may also generate three-dimensional data for comparison that indicate location coordinates and highness/lowness of priority levels of the pipes. The comparison data generation unit 113 transmits the generated data for comparison to the output unit 103.

The data storage unit 114 stores the various types of information on the piping installation, which are input via the input unit 101. Further, the data storage unit 114 may store information on the evaluation item set by the evaluation item setting unit 111, the priority level calculated by the priority level calculation unit 112, and the data for comparison generated by the comparison data generation unit 113.

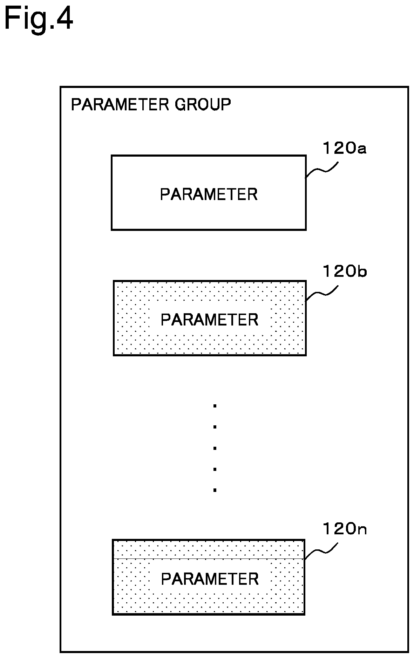

Fig. 4 schematically illustrates an example of evaluation items at the time of calculating a priority level. In the example of Fig. 4, a state in which two parameters being parameters 102b and 120n are selected as evaluation items from 14 parameters set as parameters 120a to 120n, is illustrated. The parameters selected as information used for calculation of a priority level, specifically, the evaluation items are selected from the parameters 120a to 120n by following a predetermined rule set in advance. The parameters used for calculation of a priority level may be selected by a user.

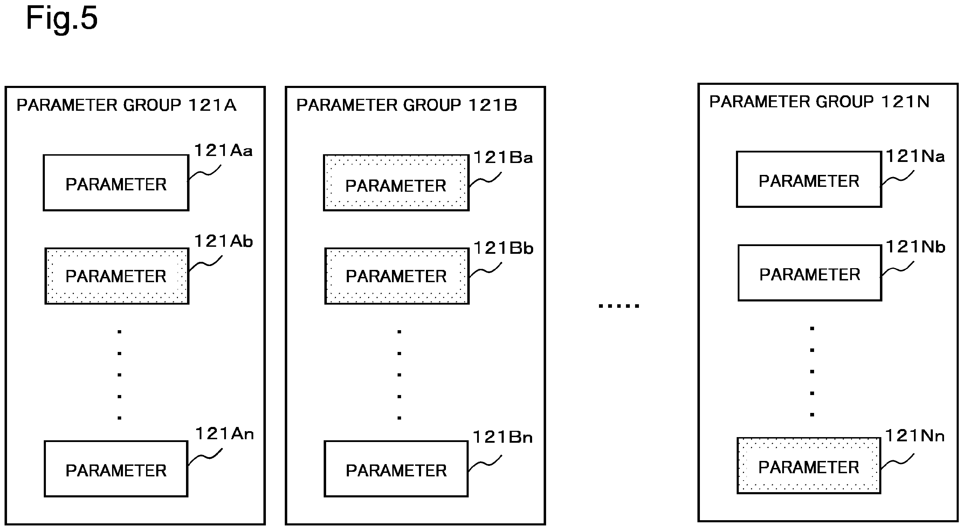

Fig. 5 schematically illustrates another example of the various types of information on the piping installation. The various types of information illustrated in Fig. 5 are different from the example illustrated in Fig. 4 in that the various types of information are classified into 14 groups being parameter groups 121A to 121N and parameters are set for each of the classified groups. The number of parameters and parameter groups in Fig. 4 and Fig. 5 may be other than 14.

Each of the parameter groups is assigned any one of groups, such as Classification 1, Classification 2, Classification 3, ..., and Classification N that are classified in accordance with attribution of the parameters. For example, Classification 1 is assigned to the parameter group 121A as a group of parameters that directly affect costs when the target piping installation has a malfunction. For example, Classification 2 is assigned to the parameter group 121B as a group of parameters that indirectly affect costs when the target piping installation has a malfunction. Further, Classification 3 is assigned to the parameter group 121C as a group of parameters that directly affect costs when the target piping installation does not have a malfunction. Further, Classification N is assigned to the parameter group 121N as a group of parameters that indirectly affect costs when the target piping installation does not have a malfunction.

In Classification 1, an amount of water consumption of a consumer relevant to a water leakage amount, the number of joined pipes downstream, and the like may be set. Presence or absence of important facilities in the periphery and the like may be set in Classification 2, a degree of construction difficulty, an insurance premium, and the like may be set in Classification 3, and a pressure, the number of complaints from a consumer, and the like may be set in Classification N. The parameters included in each Classification may be other than those described above.

In the case with the configuration as in Fig. 5, the analysis unit 102 selects any number of parameters for each of the parameter groups 121A to 121N. Further, the analysis unit 102 performs weighting among the parameter groups and among the parameters. For example, as illustrated in Fig. 5, it is assumed that parameters 121Ab, 121Ba, 121Bb, and 121Nn are selected. Further, it is assumed that the parameter groups 121A, 121B, and 120N are weighted with 0.5, 0.2, and 0.3 and that equal weighting is set in each of the parameter groups. In this case, the parameter 121Ab has a weighting coefficient of 0.5×1, each of the parameters 121Ba and 121Bb has a weighting coefficient of 0.2×0.5, and the parameter 121Nn has a weighting coefficient of 0.3×1. The analysis unit 102 calculates scores by following a predetermined rule, based on results of the weighting, and calculates a priority level of replacement or repair of the target piping installation in proportion to the scores.

Further, the function of the analysis unit 102 of the present example embodiment is relevant to the evaluation item setting means 2 and the priority level calculation means 3 of the first example embodiment.

The output unit 103 outputs the priority order calculated by the analysis unit 102. The output unit 103 outputs the calculation results of the priority levels to the terminal device connected to the asset management device 100 or a display device connected to the asset management device 100. In this case, the calculation results are displayed on a screen of the terminal device or the display device. A user can confirm the calculation results on the screen.

The output unit 103 outputs the priority levels calculated by the analysis unit 102 as analysis results to the outside. In this case, the output unit 103 may output not only the calculated priority levels but the parameters that are selected by the analysis unit 102 and the weighting coefficients with respect to the parameters. Further, the output unit 103 may output image data containing an image that visually expresses a difference between the priority levels of the pipes for a user. The function of the output unit 103 of the present example embodiment is relevant to the output means 4 of the first example embodiment.

### [Operation of Second Example Embodiment]

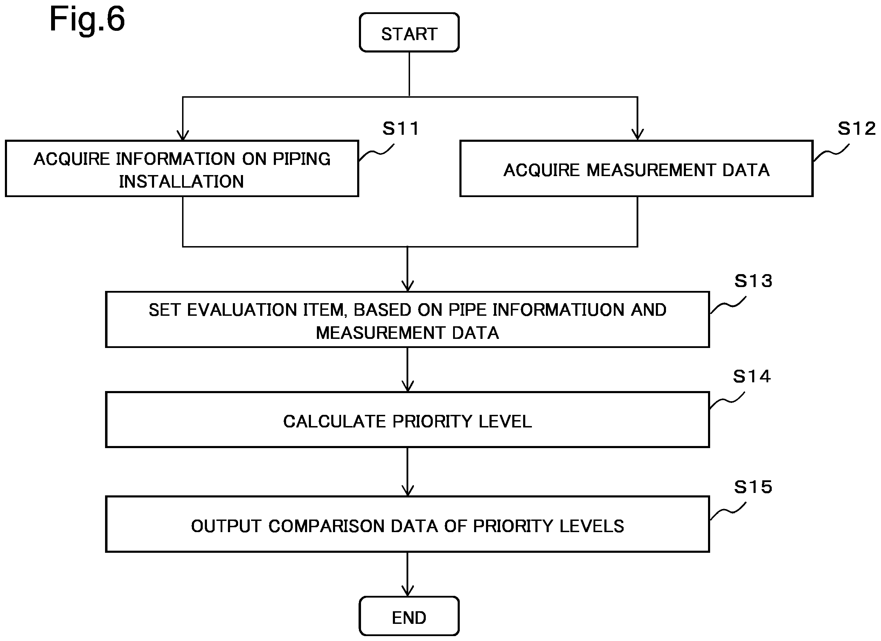

With reference to Fig. 6, an operation of the asset management device 100 according to the present example embodiment is described. Fig. 6 is a diagram illustrating an operation flow of the asset management device 100 according to the present example embodiment.

When the asset management device 100 starts the operation, first, information on the piping installation is input to the input unit 101 from the outside (Step S11). The information on the piping installation refers to, among the various types of information on the pipes, measurement data acquired by measurement, specifically, information other than physical data acquired by actual measurement. When the information on the piping installation is input from the outside, the input unit 101 transmits the received information on the piping installation to the analysis unit 102.

Further, the input unit 101 acquires measurement data from the outside, and transmits the acquired measurement data to the analysis unit 102 (Step S12). The information on the piping installation and the measurement data are also referred to as the pipe information. Only any one of the information on the piping installation and the measurement data may be acquired as the pipe information.

When the pipe information and the measurement data are input, the analysis unit 102 selects parameters used for calculation of priority levels, specifically, evaluation items, through use of at least one of the pipe information and the measurement data input from the input unit 101 (Step S13). As the evaluation items used for calculation of priority levels, the analysis unit 102 selects evaluation items that commonly hold the various types of information on the piping installation of the pipes being evaluation targets. When the parameters used for calculation of priority levels are selected, the analysis unit 102 calculates priority levels (Step S14).

When the priority levels are calculated, the output unit 103 outputs the priority levels calculated by the analysis unit 102 as analysis results to the outside (Step S15). The output unit 103 outputs the calculation results of the priority levels to the terminal device connected to the asset management device 100 or the display device connected to the asset management device 100. By calculating the priority levels of replacement or repair of the piping installation and outputting the results as described above, a user can determine an appropriate timing for replacement, repair, or the like of the pipes and an order of performing replacement, repair, or the like with reference to the priority levels.

### [Effects of Second Example Embodiment]

In the asset management device 100 according to the present example embodiment, the analysis unit 102 sets the evaluation items that commonly share the various types of information such as the pipe information on the pipes being evaluation targets, as the evaluation items for calculation of the priority level, and calculates the priority level of replacement or repair of each of the pipes with regard to the set evaluation items. Further, in the asset management device 100, the analysis unit 102 selects the evaluation items from among the various types of information that are commonly shared by the pipes being evaluation targets when the evaluation items are selected. Thus, the asset management device 100 according to the present example embodiment can calculate the priority levels for all the pipes being evaluation targets with regard to the same evaluation items. By calculating the priority levels with regard to the same evaluation items, the asset management device 100 according to the present example embodiment can generate the appropriate data for comparison indicating the priority levels of replacement or repair of the pipes. As a result, the asset management device 100 according to the present example embodiment can present the information on the pipes that require a response appropriately, based on the priority levels.

### [Third Example Embodiment]

### [Configuration of Third Example Embodiment]

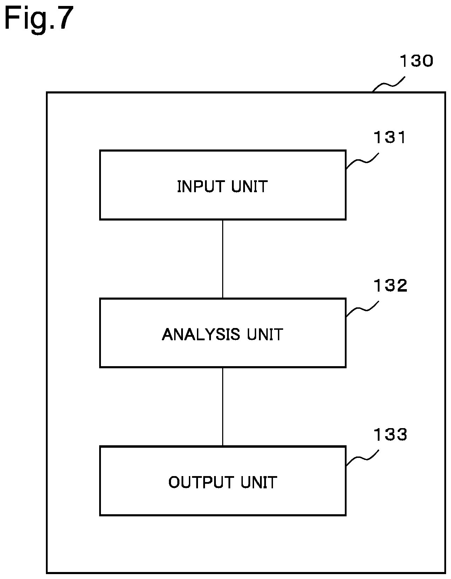

With reference to the drawings, a third example embodiment of the present invention is described in detail. Fig. 7 is a block diagram illustrating an outline of a configuration of an asset management device 130 according to the present example embodiment. The asset management device 100 according to the second example embodiment sets the evaluation items, based on various types of information on the piping installation, but the asset management device 130 according to the present example embodiment is characterized in that evaluation items are set in further consideration of key performance indicators (KPIs) being objectives for management of the piping installation.

The asset management device 130 according to the present example embodiment includes an input unit 131, an analysis unit 132, and an output unit 133.

The input unit 131 receives input of selection of KPI items in asset management from the outside. The input unit 131 transmits the received KPIs to the analysis unit 132. For example, as the KPIs, a type of pipes, a length of pipes, a diameter of pipes, the number of bursts of pipes, and a leakage amount of a fluid from a pipe are set. Further, in the KPIs, a time period during which a user cannot use a fluid inside a pipe, estimated damages when an accident occurs in a pipe, a pressure of a fluid inside a pipe, a degree of contamination of a fluid inside a pipe, complaints from a user, and the like may be set as items. At least one item among the items described above is selected as a KPI, and is input as a KPI to the input unit 131.

The analysis unit 132 selects at least one evaluation item from the various types of information on the piping installation for the KPI input via the input unit 131. The analysis unit 132 calculates a priority level of replacement or repair of the pipes, through use of the selected evaluation item. The analysis unit 132 transmits data indicating calculated priority levels to the output unit 133.

The analysis unit 132 presents, to a user, the KPIs that can calculate priority levels with the various types of information on the piping installation that are input, specifically, the held information, sets evaluation items with respect to the KPIs in accordance with selection by a user, and calculates priority levels. For example, as the KPIs, Case 1 where a water leakage amount of X liters per year and a total update length of Y kilometers per year are set to objectives, Case 2 where a water leakage amount of A liters per year and the number Z of complaints from a user per year are set to objectives, and the like are presented. The analysis unit 102 may select evaluation items with respect to the input KPIs by following a predetermined rule.

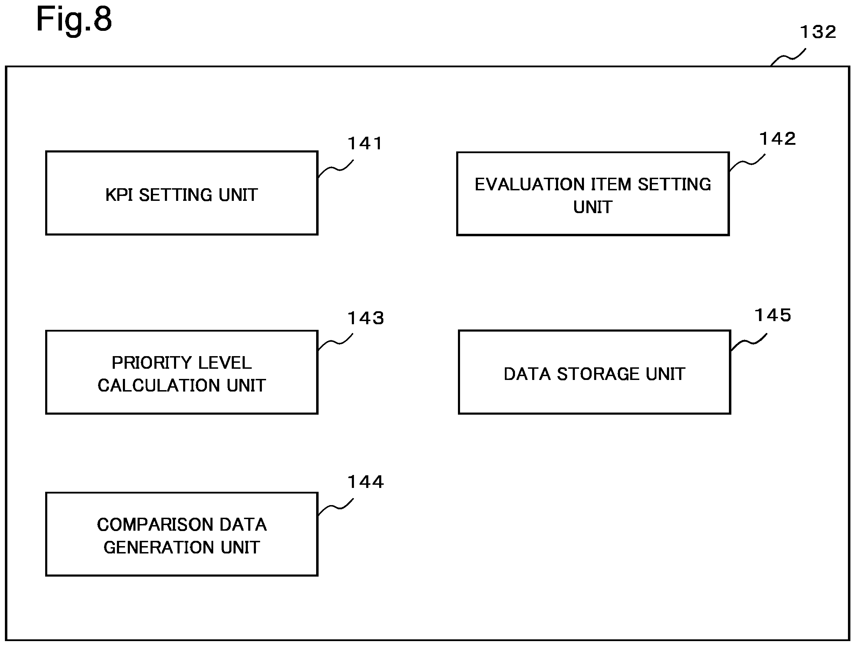

Fig. 8 is a block diagram illustrating a configuration example of the analysis unit 132 of the present example embodiment. The analysis unit 132 illustrated in Fig. 8 includes a KPI setting unit 141, an evaluation item setting unit 142, a priority level calculation unit 143, a comparison data generation unit 144, and a data storage unit 145. The KPI setting unit 141 performs transmission to the data storage unit 145.

The KPI setting unit 141 determines KPIs that can be set from the various types of information on the piping installation. The KPI setting unit 141 transmits information on the KPIs that can be set to the output unit 133.

The evaluation item setting unit 142 sets evaluation items relating to the KPIs input via the input unit 131. The KPI setting unit 141 transmits information on the set evaluation items to the priority level calculation unit 143.

The priority level calculation unit 143 calculates a priority level for each of the pipes with respect to the KPIs, based on the information on the evaluation items. For example, the priority levels are performed with an algorithm set in advance, based on data converted into numeral values for each evaluation item. The priority level calculation unit 143 transmits the information on the calculated priority levels to the comparison data generation unit 144.

The comparison data generation unit 144 generates data that allow comparison of the priority levels of the pipes relating to the KPIs. The comparison data generation unit 144 generates the data for comparison by, for example, generating display data in which pieces of data associating the priority levels with information for identifying pipes are arranged in the order from the pipe having the highest priority level. As the data for comparison, the comparison data generation unit 144 may also generate map data in which the priority levels are indicated with numerical values or colors at locations of the pipes on a map or a two-dimensional coordinate. Further, the comparison data generation unit 144 may also generate three-dimensional data for comparison that indicate position coordinates and highness/lowness of priority levels of the pipes. The comparison data generation unit 144 transmits the generated data for comparison to the output unit 133.

The data storage unit 145 stores the various types of information on the piping installation, which are input via the input unit 131. The data storage unit 145 may store the KPIs set by the KPI setting unit 141, the input KPIs, the evaluation items set by the evaluation item setting unit 142, the priority levels calculated by the priority level calculation unit 143, and the data for comparison generated by the comparison data generation unit 144.

The output unit 133 presents, to a user, the available KPIs from the various types of information on the piping installation that are input. The output unit 133 outputs the priority levels relating to the KPIs, which are calculated by the analysis unit 132, as the analysis results to the outside.

### [Operation of Third Example Embodiment]

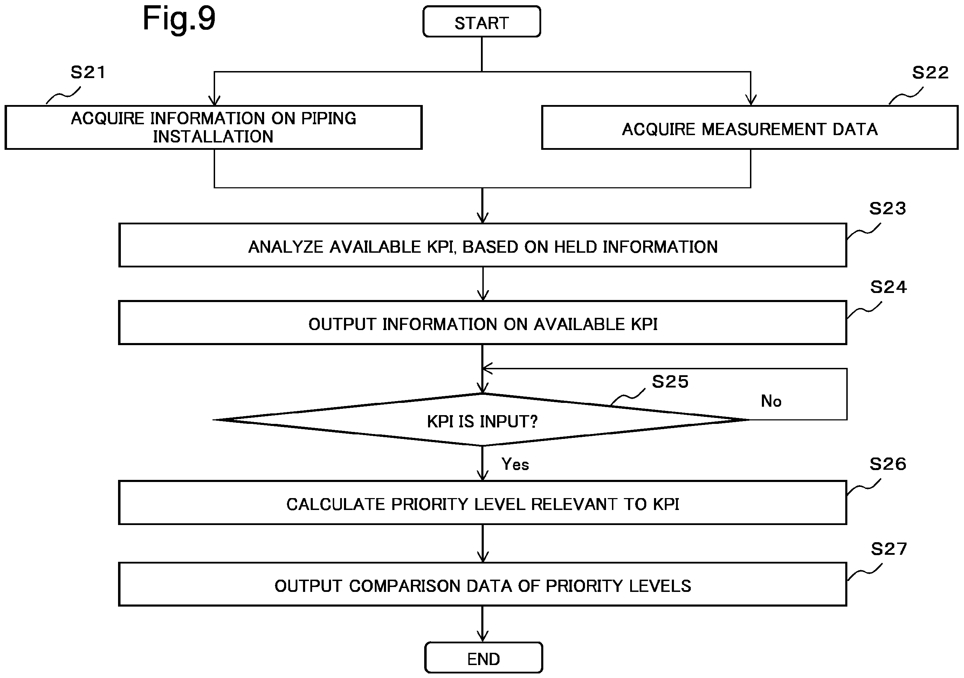

An operation of the asset management device 130 according to the present example embodiment is described. Fig. 9 is a diagram illustrating an operation flow of the asset management device 130 according to the present example embodiment.

First, similarly to the second example embodiment, the input unit 131 receives the information on the piping installation from the outside. When the information on the piping installation is input from the outside, the input unit 131 transmits the received information on the piping installation to the analysis unit 132 (Step S21).

Further, the input unit 131 acquires measurement data from the outside, and transmits the acquired measurement data to the analysis unit 132 (Step S22). The operation in either one of Step S21or Step S22 may not be performed.

When receiving the information on the piping installation and the measurement data, specifically, the pipe information, the analysis unit 132 selects available KPIs from the held information, based on the input KPIs (Step S23). The available KPIs refer to KPIs that can set the evaluation items and calculate the priority levels, based on the held information.

When the available KPIs are selected, the analysis unit 132 transmits the information on the available KPIs to the output unit 133. When the information on the available KPIs is received, the output unit 133 outputs the information on the available KPIs to the display device and displays the information (Step S24).

When the KPIs used for evaluation are input by a user from the outside to the input unit 131 (Yes in Step S25), the input unit 131 transmits the input KPIs to the analysis unit 132. When the KPIs are not input to the input unit 131 (No in Step S25), the asset management device 130 stands by until the KPIs are input.

When the information on the KPIs is received, the analysis unit 132 calculates the priority levels relevant to the received KPIs through use of the pipe information (Step S26). When the priority levels are calculated, the analysis unit transmits the priority levels to the output unit. When the priority levels are received, the output unit 133 outputs the information on the priority levels to the display device and displays the information (Step S27).

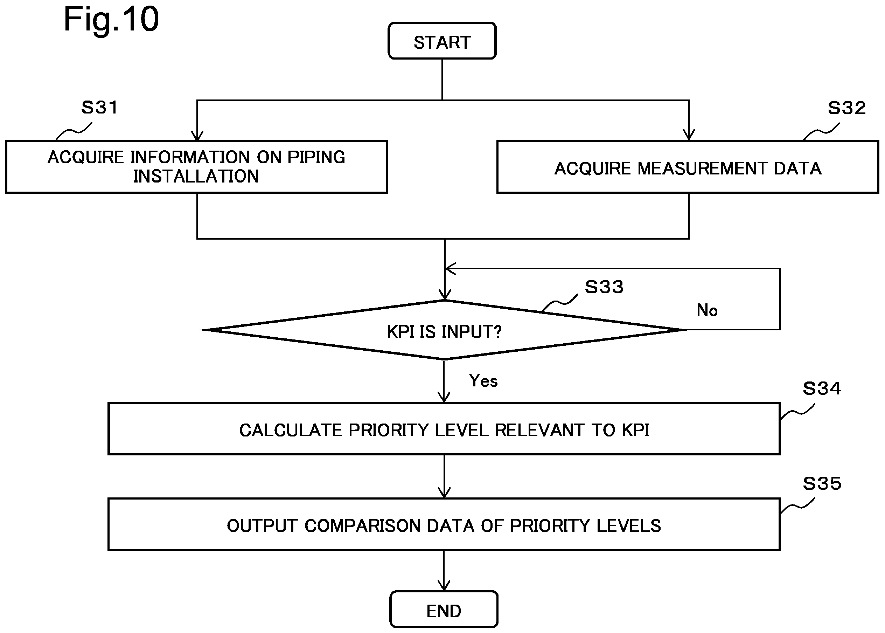

Further, in the asset management device 130 according to the present example embodiment, evaluation items relevant to KPIs selected from KPIs set in advance may be set instead of setting available KPIs, and the priority levels may be calculated. In this case with such configuration, the asset management device 130 is operated in accordance with the flow illustrated in Fig. 10. Fig. 10 is a diagram illustrating an operation flow of the asset management device 130 in a case where the evaluation items relevant to the KPIs selected from the KPIs set in advance are set, and an operation of calculating the priority levels is performed. When the operation is performed as in Fig. 10, first, the input unit 131 receives the information on the piping installation from the outside (Step S31). When the information on the piping installation is input from the outside, the input unit 131 transmits the received information on the piping installation to the analysis unit 132.

Further, the input unit 131 acquires the measurement data from the outside, and transmits the acquired measurement data to the analysis unit 132 (Step S32). The operation in either one of Step S31 or Step S32 may not be performed.

Subsequently, when the KPIs used for evaluation are input by a user from the outside to the input unit 131 (Yes in Step S33), the input unit 131 transmits the input KPIs to the analysis unit 132. When the KPIs are not input to the input unit 131 (No in Step S33), the asset management device 130 stands by until the KPIs are input.

When the information on KPIs is received, the analysis unit 132 calculates the priority levels relevant to the received KPIs through use of the pipe information (Step S34). When the priority levels are calculated, the analysis unit transmits the priority levels to the output unit. When the priority levels are received, the output unit 133 outputs the information on the priority levels to the display device and displays the information (Step S35).

### [Effects of Third Example Embodiment]

The asset management device 130 according to the present example embodiment sets the evaluation items relevant to the KPIs, calculates the priority levels relevant to the evaluation items, and generates comparison data indicating the priority levels of replacement or repair of the pipes. Thus, the asset management device 130 according to the present example embodiment can generate and output the comparison data indicating the priority levels of replacement or repair while emphasizing more on the important items and the like for management.

### [Fourth Example Embodiment]

### [Configuration of Fourth Example Embodiment]

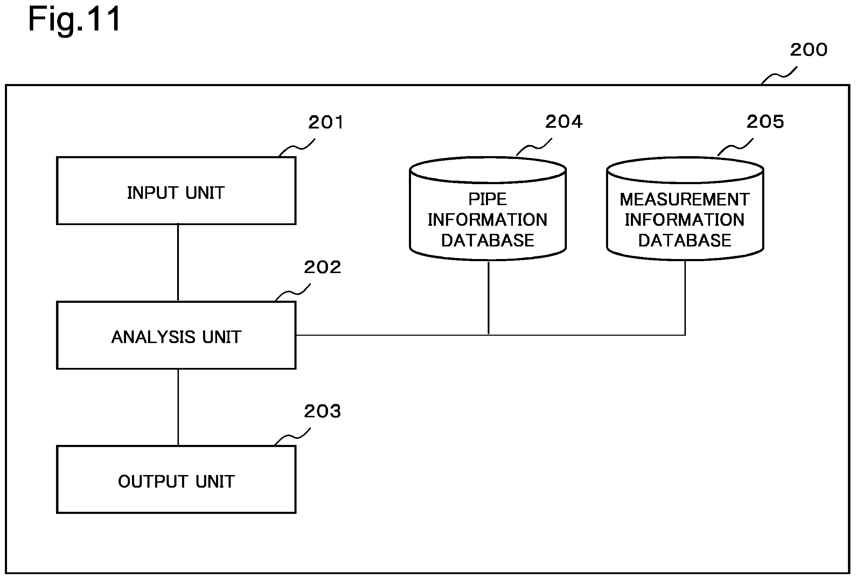

With reference to the drawings, a fourth example embodiment of the present invention is described in detail. Fig. 11 is a block diagram illustrating an outline of a configuration of an asset management device 200 according to the present example embodiment. The asset management device 200 according to the present example embodiment is characterized in that various types of information on piping installation are stored as a database and that an analysis unit performs setting of evaluation items and calculation of priority levels, based on information acquired from the database.

The asset management device 200 according to the present example embodiment includes an input unit 201, an analysis unit 202, an output unit 203, a pipe information database 204, and a measurement information database 205. The configuration and the function of the output unit 203 of the present example embodiment are similar to the components denoted with the same names in the second example embodiment.

The input unit 201 has a function of receiving an input of operation start, selection results of information, and the like.

Other than acquisition of the various types of information on the piping installation, a configuration and a function of the analysis unit 202 are similar to the components denoted with the same names in the second example embodiment. The various types of information on the piping installation for the analysis unit 202 are acquired from the pipe information database 204 and the measurement information database 205.

The pipe information database 204 stores information on piping installation that is used by the analysis unit 202. The information on the piping installation stored in the pipe information database 204 includes information similar to the information on the piping installation of the second example embodiment. The measurement information database 205 stores measurement information that is used by the analysis unit 202. The measurement information stored in the measurement information database 205 includes information similar to the measurement information described in the first example embodiment.

Further, in Fig. 11, the pipe information database 204 and the measurement information database 205 are constructed inside the asset management device 200. In place of such a configuration, at least one of the pipe information database 204 and the measurement information database 205 may be provided from an external computer. For example, as at least one of the pipe information database 204 and the measurement information database 205, a database provided by a geographic information system (GIS) may be used.

### [Operation of Fourth Example Embodiment]

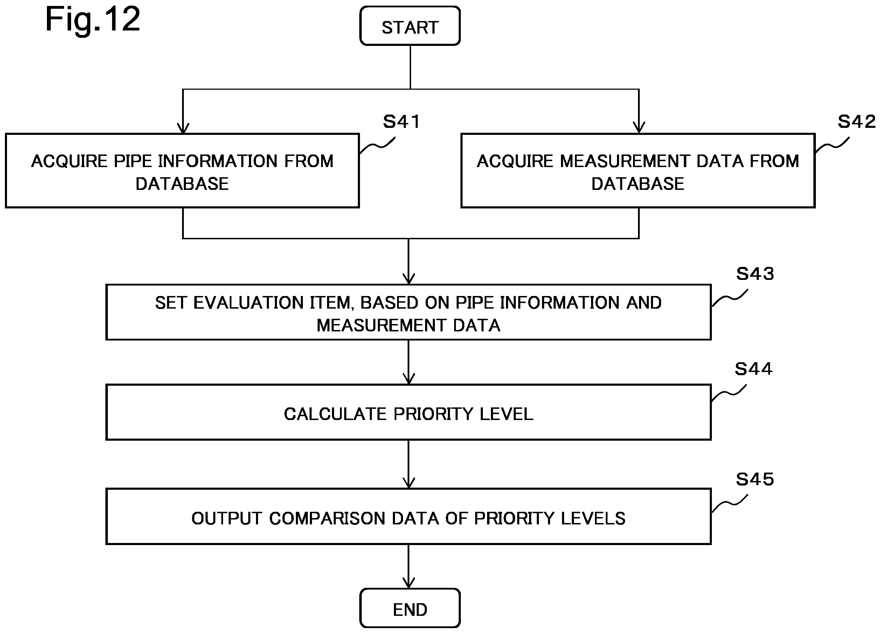

An operation of the asset management device 200 according to the present example embodiment is described. Fig. 12 is a diagram illustrating an operation flow of the asset management device 200 according to the present example embodiment.

When the asset management device 200 starts an operation, the analysis unit 202 acquires the pipe information from the pipe information database 204 (Step S41). Further, the analysis unit 202 acquires the measurement data from the measurement information database (Step S42).

When the pipe information and the measurement data are acquired, the analysis unit 202 selects parameters, specifically, evaluation items that are used for calculation of priority levels from the acquired data (Step S43). When the parameters used for calculation of the priority levels are selected, the analysis unit 202 calculates the priority levels (Step S44).

When the priority levels are calculated, the output unit 203 outputs the priority levels, which are calculated by the analysis unit 202, as analysis results to the outside (Step S45). The output unit 203 outputs the calculation results of the priority levels to a terminal device connected to the asset management device 200 or a display device connected to the asset management device 200. By calculating the priority levels of replacement or repair of the piping installation and outputting the results as described above, a user can determine an appropriate timing for replacement and an order of the replacement of the piping installation.

The configuration of acquiring the information on the piping installation and the measurement data from the databases of the present example embodiment may be used in combination with the technique of the third example embodiment.

### [Effects of Fourth Example Embodiment]

The asset management device 200 according to the present example embodiment performs setting of the evaluation items and determination of the priority levels, based on the various types of information on the piping installation acquired from the pipe information database 204 and the measurement information database 205 that are generated in advance. Thus, an amount to be processed during calculation of the priority levels can be reduced. Further, in a case where the information is acquired from the pipe information database 204 and the measurement information database 205 that are provided externally, when the information is acquired from a database or the like configured for other purposes, the system configuration can be simplified.

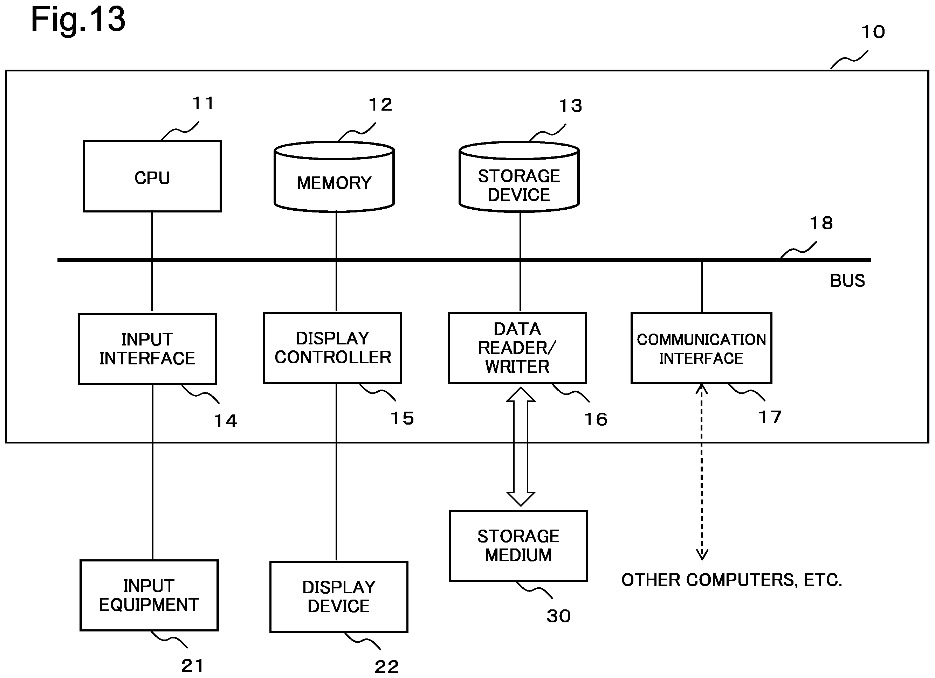

Each processing in the second example embodiment to the fourth example embodiment may be performed by executing a computer program in a computer in an information processing system as illustrated in Fig. 13. The information processing system in Fig. 13 includes a computer 10, input equipment 21, and a display device 22.

The computer 10 includes a central processing unit (CPU) 11, a memory 12, a storage device 13, an input interface 14, a display controller 15, a data reader/writer 16, and a communication interface 17. Further, the components of the computer 10 are connected in such a way as to communicate data to one another via a bus 18.

The CPU 11 executes each processing by expanding a computer program, which is stored in the storage device 13, in the memory 12 and executing the computer program.

The memory 12 is a volatile memory device such as a dynamic random access memory (DRAM). The memory 12 is provided as a main memory.

The storage device 13 stores the computer program. For example, the storage device 13 is formed of a semiconductor storage device, such as a hard disk drive and a flash memory, or a combination of those items.

The input interface 14 intermediates for data transmission between the CPU 11 and the input equipment 21 such as a keyboard and a mouse.

The display controller 15 is connected to the display device 22, and controls display on the display device 22.

The data reader/writer 16 intermediates for data transmission between the CPU 11 and a storage medium 30, and executes reading of the program from the storage medium 30 and writing of processing results in the computer 10 in the storage medium 30.

The communication interface 17 intermediates for data transmission between the CPU 11 and other computers.

The input equipment 21 is input equipment such as a keyboard and a mouse.

The display device 22 displays an image, based on the control of the display controller 15. In the display device 22, a liquid crystal display, an organic electroluminescence (EL) display, or the like is used.

Further, the program for executing the processing in each of the example embodiments is provided in a state of being stored in the computer-readable storage medium 30. Note that, the program of the present example embodiment may be distributed on the Internet connected via the communication interface 17. For example, as the storage medium 30, a non-volatile semiconductor storage device such as a flash memory, a magnetic storage medium, an optical storage medium, or other storage media capable of storing data of the program can be used.

A part or the entirety of the example embodiments described above may be described as in the following supplementary notes, but is not limited to the followings.

### (Supplementary Note 1)

An asset management device, including:
an input means for receiving an input of information on a pipe being a diagnostic target as pipe information;
an evaluation item setting means for setting, based on the pipe information that is commonly shared by the pipes being diagnostic targets, an evaluation item for the pipes;
a priority level calculation means for calculating a priority level of a response for each of the pipes being diagnostic targets with respect to the evaluation item; and
an output means for outputting data for comparing, among the pipes being diagnostic targets, calculated priority levels.

### (Supplementary Note 2)

The asset management device according to supplementary note 1, wherein
the evaluation item setting means selects at least one evaluation item group from a plurality of evaluation item groups, and sets at least one of the evaluation items for each of the selected evaluation item groups, as the evaluation item for the pipes being the diagnostic targets.

### (Supplementary Note 3)

The asset management device according to supplementary note 1 or 2, wherein
the evaluation item setting means sets the evaluation item relevant to an evaluation index being input from the input means, and
the priority level calculation means calculates a priority level of a response for each of the pipes being diagnostic targets with respect to the evaluation item relevant to the evaluation index.

### (Supplementary Note 4)

The asset management device according to supplementary note 3, wherein,
as the evaluation index, at least one of a type of the pipe, a length of the pipe, a diameter of the pipe, a number of bursts of the pipe, a leakage amount from the pipe, a time period during which a fluid in the pipe cannot be used, an amount of damage when an accident occurs in the pipe, a pressure of a fluid in the pipe, a degree of contamination of a fluid in the pipe, and a complaint from a user is selected.

### (Supplementary Note 5)

The asset management device according to supplementary note 3 or 4, wherein,
as the evaluation index, at least one of indexes relating to a characteristic of the pipe and a characteristic of a fluid in the pipe is selected.

### (Supplementary Note 6)

The asset management device according to any one of supplementary notes 3 to 5, further including:
an index generation means for generating information on a candidate for an evaluation index relevant to the evaluation item, wherein
the output means outputs a candidate for the evaluation index,
the input means receives an input of an evaluation index selected from candidates for an evaluation index of a diagnostic target, and
the priority level calculation means calculates the priority level with respect to the input evaluation index.

### (Supplementary Note 7)

The asset management device according to any one of supplementary notes 1 to 6, wherein
the evaluation item setting means sets the evaluation item, based on at least one of pipe type information, laying information, structure information, environmental influence information, user complaints information, and physical information acquired by actual measurement, with regard to the pipes being diagnostic targets.

### (Supplementary Note 8)

The asset management device according to any one of supplementary notes 1 to 7, wherein
the evaluation item setting means sets physical information acquired by actual measurement as the evaluation item, and
the priority level calculation means calculates an updated priority level of a response, based on the set evaluation item.

### (Supplementary Note 9)

The asset management device according to any one of supplementary notes 1 to 8, wherein
the input means acquires the pipe information from a database.

### (Supplementary Note 10)

The asset management device according to any one of supplementary notes 1 to 9, further including
a map display means for displaying, on a map, the priority level in association with a location at which the pipe is installed.

### (Supplementary Note 11)

An asset management method, including:
acquiring information on a pipe being a diagnostic target as pipe information;
setting, based on the pipe information that is commonly shared by the pipes being diagnostic targets, an evaluation item for the pipes;
calculating a priority level of a response for each of the pipes being diagnostic targets with respect to the evaluation item; and
outputting data for comparing, among the pipes being diagnostic targets, calculated priority levels.

### (Supplementary Note 12)

The asset management method according to supplementary note 11, further including
selecting at least one evaluation item group from a plurality of evaluation item groups, and setting at least one of the evaluation items for each of the selected evaluation item groups, as the evaluation item for the pipes being diagnostic targets.

### (Supplementary Note 13)

The asset management method according to supplementary note 11 or 12, further including:
setting the evaluation item relevant to an input evaluation index; and
calculating a priority level of a response for each of the pipes being diagnostic targets with respect to the evaluation item relevant to the evaluation index.

### (Supplementary Note 14)

The asset management method according to supplementary note 13, further including
selecting, as the evaluation index, at least one of a type of the pipe, a length of the pipe, a diameter of the pipe, a number of bursts of the pipe, a leakage amount from the pipe, a time period during which a fluid in the pipe cannot be used, an amount of damage when an accident occurs in the pipe, a pressure of a fluid in the pipe, a degree of contamination of a fluid in the pipe, and a complaint from a user.

### (Supplementary Note 15)

The asset management method according to supplementary note 14, including
selecting, as the evaluation index, at least one of indexes relating to a characteristic of the pipe and a characteristic of a fluid in the pipe.

### (Supplementary Note 16)

The asset management method according to any one of supplementary notes 13 to 15, further including:
generating information on a candidate for an evaluation index relevant to the evaluation item;
outputting a candidate for the evaluation index;
receiving an input of an evaluation index selected from candidates for an evaluation index of a diagnostic target; and
calculating the priority level with respect to the input evaluation index.

### (Supplementary Note 17)

The asset management method according to any one of supplementary notes 11 to 16, further including
setting the evaluation item, based on at least one of pipe type information, laying information, structure information, environmental influence information, user complaint information, and physical information acquired by actual measurement, with regard to the pipes being diagnostic targets.

### (Supplementary Note 18)

The asset management method according to any one of supplementary notes 11 to 17, further including:
setting physical information acquired by actual measurement as the evaluation item; and
calculating an updated priority level of a response, based on the set evaluation item.

### (Supplementary Note 19)

The asset management method according to any one of supplementary notes 11 to 18, further including
acquiring the pipe information from a database.

### (Supplementary Note 20)

The asset management method according to any one of supplementary notes 11 to 19, further including
a map display means for displaying, on a map, the priority level in association with a location at which the pipe is installed.

### (Supplementary Note 21)

An asset management program causing a computer to execute:
acquisition processing of acquiring information on a pipe being a diagnostic target as pipe information;
evaluation item setting processing of setting, based on the pipe information that is commonly shared by the pipes being diagnostic targets, an evaluation item for the pipes;
priority level calculation processing of calculating a priority level of a response for each of the pipes being diagnostic targets with respect to the evaluation item; and
output processing of outputting data for comparing, among the pipes being diagnostic targets, calculated priority levels.

### (Supplementary Note 22)

The asset management program according to supplementary note 21, wherein,
in the evaluation item setting processing, at least one evaluation item group is selected from a plurality of evaluation item groups, and at least one of the evaluation items is set for each of the selected evaluation item groups, as the evaluation item for the pipes being the diagnostic targets.

### (Supplementary Note 23)

The asset management program according to supplementary note 21 or 22, wherein,
in the evaluation item setting processing, the evaluation item relevant to an evaluation index being input in the acquisition processing is set, and
in the priority level calculation processing, a priority level of a response for each of the pipes being diagnostic targets with respect to the evaluation item relevant to the evaluation index is calculated.

### (Supplementary Note 24)

The asset management program according to supplementary note 23, wherein,
as the evaluation index, at least one of a type of the pipe, a length of the pipe, a diameter of the pipe, a number of bursts of the pipe, a leakage amount from the pipe, a time period during which a fluid in the pipe cannot be used, an amount of damage when an accident occurs in the pipe, a pressure of a fluid in the pipe, a degree of contamination of a fluid in the pipe, and a complaint from a user is selected.

### (Supplementary Note 25)

The asset management program according to supplementary note 24, wherein,
as the evaluation index, at least one of indexes relating to a characteristic of the pipe and a characteristic of a fluid in the pipe is selected.

### (Supplementary Note 26)

The asset management program according to any one of supplementary notes 23 to 25, the program further causing a computer to execute
index generation processing of generating information on a candidate for an evaluation index relevant to the evaluation item, wherein,
in the output processing, a candidate for the evaluation index is output,
in the acquisition processing, an input of an evaluation index selected from candidates for an evaluation index of a diagnostic target is received, and
in the priority level calculation processing, the priority level with respect to the input evaluation index is calculated.

### (Supplementary Note 27)

The asset management program according to any one of supplementary notes 21 to 26, wherein,
in the evaluation item setting processing, the evaluation item based on at least one of pipe type information, laying information, structure information, environmental influence information, user complaint information, and physical information acquired by actual measurement, with regard to the pipes being diagnostic targets is set.

### (Supplementary Note 28)

The asset management program according to any one of supplementary notes 21 to 27, wherein,
in the evaluation item setting processing, physical information acquired by actual measurement is set as the evaluation item, and
in the priority level calculation processing, an updated priority level of a response is calculated based on the set evaluation item.

### (Supplementary Note 29)

The asset management program according to any one of supplementary notes 21 to 28, wherein,
in the acquisition processing, the pipe information is acquired from a database.

### (Supplementary Note 30)

The asset management program according to any one of supplementary notes 21 to 29, the program further causing a computer to execute
map display processing of displaying, on a map, the priority level in association with a location at which the pipe is installed.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2017-246521, filed on December 22, 2017, the disclosure of which is incorporated herein in its entirety by reference.

### [Reference signs List]

- 1: Input means
- 2: Evaluation item setting means
- 3: Priority level calculation means
- 4: Output means
- 10: Computer
- 11: CPU
- 12: Memory
- 13: Storage device
- 14: Input interface
- 15: Display controller
- 16: Data reader/writer
- 17: Communication interface
- 21: Input equipment
- 22: Display device
- 30: Storage medium
- 100: Asset management device
- 101: Input unit
- 102: Analysis unit
- 103: Output unit
- 111: Evaluation item setting unit
- 112: Priority level calculation unit
- 113: Comparison data generation unit
- 114: Data storage unit
- 130: Asset management device
- 131: Input unit
- 132: Analysis unit
- 133: Output unit
- 141: KPI setting unit
- 142: Evaluation item setting unit
- 143: Priority level calculation unit
- 144: Comparison data generation unit
- 145: Data storage unit
- 200: Asset management device
- 201: Input unit
- 202: Analysis unit
- 203: Output unit
- 204: Pipe information database
- 205: Measurement information database

## Claims

1. An asset management device, comprising:
input means for receiving an input of information on a pipe being a diagnostic target as pipe information;
evaluation item setting means for setting, based on the pipe information that is commonly shared by the pipes being diagnostic targets, an evaluation item for the pipes;
priority level calculation means for calculating a priority level of a response for each of the pipes being diagnostic targets with respect to the evaluation item; and
output means for outputting data for comparing, among the pipes being diagnostic targets, calculated priority levels.

2. The asset management device according to claim 1, wherein
the evaluation item setting means selects at least one evaluation item group from a plurality of evaluation item groups, and sets at least one of the evaluation items for each of the selected evaluation item groups, as the evaluation item for the pipes being diagnostic targets.

3. The asset management device according to claim 1 or 2, wherein
the evaluation item setting means sets the evaluation item relevant to an evaluation index being input from the input means, and
the priority level calculation means calculates a priority level of a response for each of the pipes being diagnostic targets with respect to the evaluation item relevant to the evaluation index.

4. The asset management device according to claim 3, wherein
at least one of a type of the pipe, a length of the pipe, a diameter of the pipe, a number of bursts of the pipe, a leakage amount from the pipe, a time period during which a fluid in the pipe cannot be used, an amount of damage when an accident occurs in the pipe, a pressure of a fluid in the pipe, a degree of contamination of a fluid in the pipe, and a complaint from a user is selected as the evaluation index.

5. The asset management device according to claim 3 or 4, wherein
at least one of indexes relating to a characteristic of the pipe and a characteristic of a fluid in the pipe is selected as the evaluation index.

6. The asset management device according to any one of claims 3 to 5, further comprising:
index generation means for generating information on a candidate for an evaluation index relevant to the evaluation item, wherein
the output means outputs a candidate for the evaluation index,
the input means receives an input of an evaluation index selected from candidates for an evaluation index of a diagnostic target, and
the priority level calculation means calculates the priority level with respect to the input evaluation index.

7. The asset management device according to any one of claims 1 to 6, wherein
the evaluation item setting means sets the evaluation item based on at least one of pipe type information, laying information, structure information, environmental influence information, user complaint information, and physical information acquired by actual measurement, with regard to the pipes being diagnostic targets.

8. The asset management device according to any one of claims 1 to 7, wherein
the evaluation item setting means sets physical information acquired by actual measurement as the evaluation item, and
the priority level calculation means calculates an updated priority level of a response, based on the set evaluation item.

9. The asset management device according to any one of claims 1 to 8, wherein
the input means acquires the pipe information from a database.

10. The asset management device according to any one of claims 1 to 9, further comprising
map display means for displaying, on a map, the priority level in association with a location at which the pipe is installed.

11. An asset management method, comprising:
acquiring information on a pipe being a diagnostic target as pipe information;
setting, based on the pipe information that is commonly shared by the pipes being diagnostic targets, an evaluation item for the pipes;
calculating a priority level of a response for each of the pipes being diagnostic targets with respect to the evaluation item; and
outputting data for comparing, among the pipes being diagnostic targets, calculated priority levels.

12. The asset management method according to claim 11, further comprising
selecting at least one evaluation item group from a plurality of evaluation item groups, and setting at least one of the evaluation items for each of the selected evaluation item groups, as the evaluation item for the pipes being diagnostic targets.

13. The asset management method according to claim 11 or 12, further comprising:
setting the evaluation item relevant to an input evaluation index; and
calculating a priority level of a response for each of the pipes being diagnostic targets with respect to the evaluation item relevant to the evaluation index.

14. The asset management method according to claim 13, further comprising
selecting, as the evaluation index, at least one of a type of the pipe, a length of the pipe, a diameter of the pipe, a number of bursts of the pipe, a leakage amount from the pipe, a time period during which a fluid in the pipe cannot be used, an amount of damage when an accident occurs in the pipe, a pressure of a fluid in the pipe, a degree of contamination of a fluid in the pipe, and a complaint from a user.

15. The asset management method according to claim 13 or 14, further comprising
selecting, as the evaluation index, at least one of indexes relating to a characteristic of the pipe and a characteristic of a fluid in the pipe.

16. The asset management method according to any one of claims 13 to 15, further comprising:
generating information on a candidate for an evaluation index relevant to the evaluation item;
outputting a candidate for the evaluation index;
receiving an input of an evaluation index selected from candidates for an evaluation index of a diagnostic target, and
calculating the priority level with respect to the input evaluation index.

17. The asset management method according to any one of claims 11 to 16, further comprising
setting the evaluation item based on at least one of pipe type information, laying information, structure information, environmental influence information, user complaint information, and physical information acquired by actual measurement, with regard to the pipes being diagnostic targets.

18. The asset management method according to any one of claims 11 to 17, further comprising:
setting physical information acquired by actual measurement as the evaluation item; and
calculating an updated priority level of a response, based on the set evaluation item.

19. The asset management method according to any one of claims 11 to 18, further comprising
acquiring the pipe information from a database.

20. The asset management method according to any one of claims 11 to 19, further comprising
map display means for displaying, on a map, the priority level in association with a location at which the pipe is installed.

21. A computer-readable storage medium that stores an asset management program causing a computer to execute:
acquisition processing of acquiring information on a pipe being a diagnostic target as pipe information;
evaluation item setting processing of setting, based on the pipe information that is commonly shared by the pipes being diagnostic targets, an evaluation item for the pipes;
priority level calculation processing of calculating a priority level of a response for each of the pipes being diagnostic targets with respect to the evaluation item; and output processing of outputting data for comparing, among the pipes being diagnostic targets, calculated priority levels.

22. The computer-readable storage medium that stores an asset management program according to claim 21, wherein,
in the evaluation item setting processing, at least one evaluation item group is selected from a plurality of evaluation item groups, and at least one of the evaluation items is set for each of the selected evaluation item groups, as the evaluation item for the pipes being the diagnostic targets.

23. The computer-readable storage medium that stores an asset management program according to claim 21 or 22, wherein,
in the evaluation item setting processing, the evaluation item relevant to an evaluation index being input in the acquisition processing is set, and
in the priority level calculation processing, a priority level of a response for each of the pipes being diagnostic targets with respect to the evaluation item relevant to the evaluation index is calculated.

24. The computer-readable storage medium that stores an asset management program according to claim 23, wherein
at least one of a type of the pipe, a length of the pipe, a diameter of the pipe, a number of bursts of the pipe, a leakage amount from the pipe, a time period during which a fluid in the pipe cannot be used, an amount of damage when an accident occurs in the pipe, a pressure of a fluid in the pipe, a degree of contamination of a fluid in the pipe, and a complaint from a user is selected as the evaluation index.

25. The computer-readable storage medium that stores an asset management program according to claim 23 or 24, wherein
at least one of indexes relating to a characteristic of the pipe and a characteristic of a fluid in the pipe is selected as the evaluation index.

26. The computer-readable storage medium that stores an asset management program according to any one of claims 23 to 25, the program further causing a computer to execute
index generation processing of generating information on a candidate for an evaluation index relevant to the evaluation item, wherein,
in the output processing, a candidate for the evaluation index is output,
in the acquisition processing, an input of an evaluation index selected from candidates for an evaluation index of a diagnostic target is received, and
in the priority level calculation processing, the priority level with respect to the input evaluation index is calculated.

27. The computer-readable storage medium that stores an asset management program according to any one of claims 21 to 26, wherein,
in the evaluation item setting processing, the evaluation item based on at least one of pipe type information, laying information, structure information, environmental influence information, user complaint information, and physical information acquired by actual measurement, with regard to the pipes being diagnostic targets is set.

28. The computer-readable storage medium that stores an asset management program according to any one of claims 21 to 27, wherein,
in the evaluation item setting processing, physical information acquired by actual measurement is set as the evaluation item, and
in the priority level calculation processing, an updated priority level of a response is calculated based on the set evaluation item.

29. The computer-readable storage medium that stores an asset management program according to any one of claims 21 to 28, wherein,
in the acquisition processing, the pipe information is acquired from a database.

30. The computer-readable storage medium that stores an asset management program according to any one of claims 21 to 29, the program further causing a computer to execute
map display processing of displaying, on a map, the priority level in association with a location at which the pipe is installed.
